Europäisches Patentamt

European Patent Office

Office européen des brevets

(11) Publication number: **0 255 751**
**B1**

# EUROPEAN PATENT SPECIFICATION

(45) Date of publication of patent specification: **30.01.91**

(21) Application number: **87201489.9**

(22) Date of filing: **05.08.87**

(51) Int. Cl.⁵: **A 01 B 29/06,** A 01 B 29/04, A 01 B 49/02

(54) A soil cultivating machine.

(30) Priority: **06.08.86 NL 8602005**

(43) Date of publication of application:
**10.02.88 Bulletin 88/06**

(45) Publication of the grant of the patent:
**30.01.91 Bulletin 91/05**

(84) Designated Contracting States:
**DE FR GB NL**

(56) References cited:
**DE-U-8 519 861**
**FR-A-2 558 679**

(73) Proprietor: **C. van der Lely N.V.**
**Weverskade 10 P.O. Box 26**
**NL-3155 ZG Maasland (NL)**

(72) Inventor: **van der Lely, Cornelis**
**7, Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

The invention relates to a soil cultivating machine comprising a frame and a roller for cultivating the soil, which roller is provided with a scraping device which is power driven and movable about an axis.

With this type of machine known from the DE—U—8.519.861 it is possible to obtain a forced cleaning of the roller.

The scraping device with this prior art construction is constituted by a number of elastically brushes mounted on a shaft that is power driven. This constitution is rather complicated and requires a sturdy heavy shaft, in particularly when the roller has a large working width.

The invention now has for its object to provide a scraping device with a soil cultivating machine of the kind set forth, that can easily be manufactured and has a light but nevertheless strong construction.

In accordance with the invention there is provided a soil cultivating machine of the kind set forth whereby the scraping device includes a scraping member having a hollow carrier formed by a plurality of plates extending in the direction of the axis of movement.

By, means of the plates a hollow carrier can be achieved which can be easily assembled and combines a light construction with a sturdy one.

For a better understanding of the invention and to show how the same may be carried into effect, reference will now be made, by way of example, to the accompanying drawings in which:

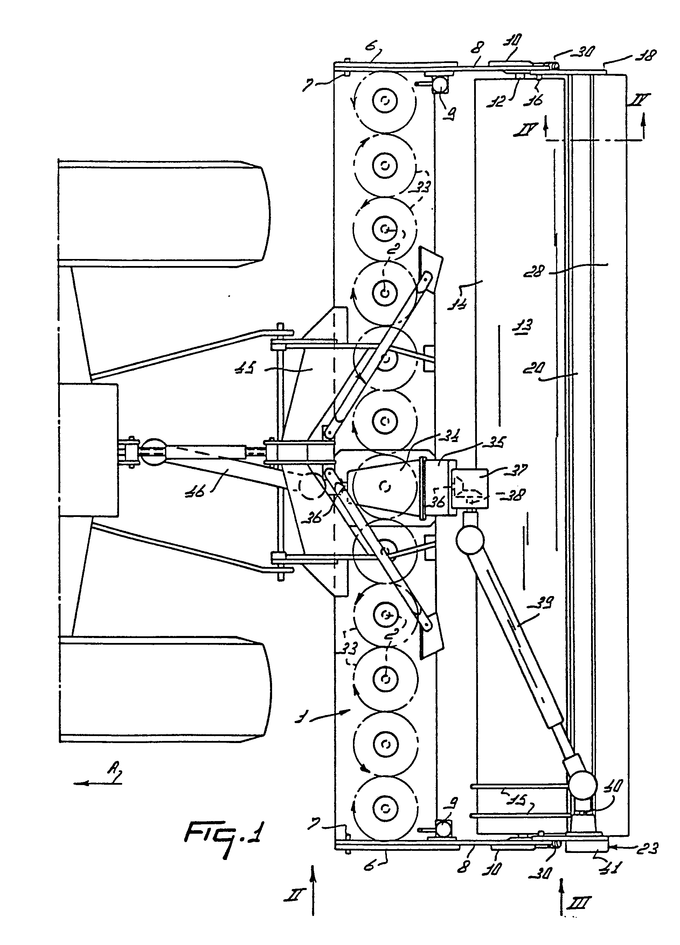

Figure 1 is a plan view of a soil cultivating machine comprising a construction according to the invention;

Figure 2 is a side view taken into the direction of the arrow II in Figure 1;

Figure 3 is, to an enlarged scale, a view taken in the direction of the arrow III in Figure 1;

Figure 4 is, to an enlarged scale, a view taken on the line IV-IV in Figure 1;

Figure 5 is a view taken in the direction of the arrow V in Figure 3 and

The implement shown in the drawings concerns a soil cultivating machine, in particular one for preparing a seed bed.

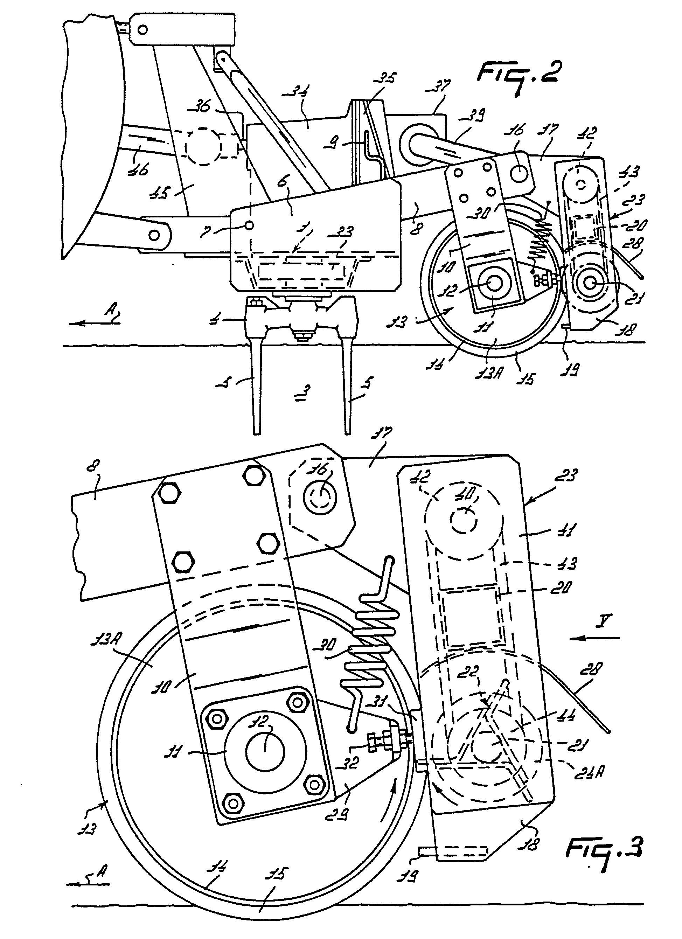

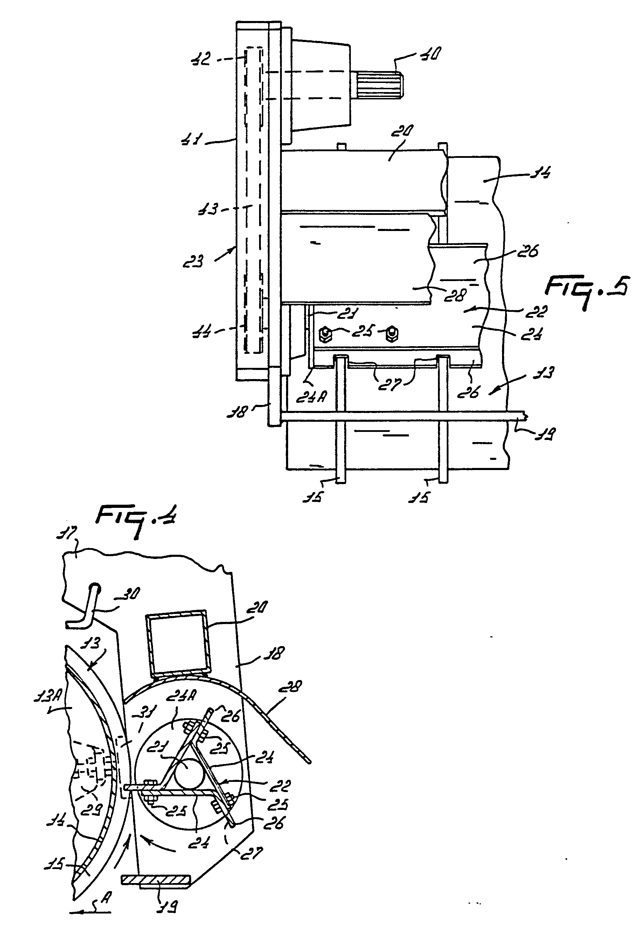

The machine comprises a box-like frame portion 1 which extends transversely to the direction of operative travel A and in which are supported, spaced apart equidistantly by preferably 25 cms, the upwardly, preferably vertically, extending shafts 2 of soil working members 3. Each of the soil working members 3 includes a carrier 4 which is provided on the end of a shaft 2 that projects from the bottom of the frame portion 1 and extends at least substantially horizontally. Near its ends, each carrier 4 is provided with soil working elements 5 which extend downwardly and are afforded by tines. The ends of the box-like frame portion 1 are closed by means of plates 6 which extend upwardly and at least substantially parallel to the direction of operative travel A of the machine. Each of the plates 6 has near its front side a bolt 7 which extends transversely to the direction of operative travel A. An arm 8 is freely pivotal about each bolt 7, the arm extending rearwardly along the inner side of the plate 6. Each of the arms 8 can be adjusted in height by means of an adjusting device comprising a threaded spindle 9 and can be locked in a plurality of positions. At some distance before its rear end, each arm 8 has a support 10 which extends obliquely downwardly and rearwardly. Between the lower ends of the respective supports 10 there is arranged freely rotatably by means of bearings accommodated in bearing housings 11 a shaft 12 of a roller 13 which extends transversely to the direction of operative travel A. The roller 13 is designed as a packer roller and includes a tubular portion 14 which is closed at its ends by means of discs 13A and has a diameter of, preferably, approximately 35 cms. At its outer circumference, the tubular portion 14 is provided with equidistant rings 15, which preferably have a height of $1\frac{1}{2}$ cms. The outermost rings 15 are located at a distance from the ends of the tubular portion 14 that is approximately half the distance between two rings (15), which distance is, preferably, approximately 10 cms. The portions of the arms 8 which are located behind the supports 10 are provided with freely pivotal supports 17 via shafts 16 extending transversely to the direction of operative travel A and being in alignment. At their rear side, each of the supports 17 includes a plate 18 which extends downwardly and by means of its lower end reaches to a point located between the axis of rotation of the roller 13 and its lower side (Figures 3 and 4); the plates 18 are bevelled at their rear bottom side. A stiffening strip 19 is disposed between the lower ends of the plates 18, which strip extends transversely to the direction of intended operative travel A. At the level of the connection of the plates 18 to the supports 17 a cross-beam 20 is provided between the plates, which beam, as is apparent from Figures 2 to 4, is box-like having, preferably, a square cross-section. The beam 20 is arranged such that its lower side extends at least substantially parallel to the lower side of the plates 18. Approximately midway of the portion of the plates 18 which extends from under the beam 20, a scraper member 22 which forms part of a scraping element 23 for the roller 13 is arranged rotatably via shafts 21. Hereby the supports 17, the plates 18 and the beam 20 constitute a carrier structure for the scraper member 22. The scraper member 22 comprises a hollow carrier formed by three identical plates 24, which extend in the longitudinal direction and parallel to the axis of rotation of the scraper member and are combined by means of bolts 25 in a manner as shown in Figures 3 and 4 to form a triangular box. The sides of the plates 24 extending beyond the angles of the triangular box constitute blade-shaped portions 26 which extend in the longitudinal direction of the scraper member 22. The blade-shaped portions 26 are located substantially radially and are provided in the region of the rings 15 on the tubular portion 14 of the roller 13 with a recess 27, through which the rings can pass (Figure 5). The ends of the plates 24 are secured to discs 24A, each supporting a shaft 21. The scraper member 22 is arranged such that the portions of the blade-shaped parts 26 which are located between the recesses 27 extend to near the outer circumference of the tubular portion 14 of the roller 13 (Figures 3 and 4). The axis of rotation of the scraper member 22 is located at the level of that of the roller 13. At the bottom side of the beam 20 there is provided a baffle 28, which at the leading side reaches to near the rings 15 and from its front side extends at least substantially concentrically relative to the axis of rotation of the scraper member 22 through a circumferential angle of approximately 90°, whereafter it merges into a straight portion extending obliquely downwardly and rearwardly. The rear side of the cover 28 is situated lower than the leading side and is located at the level of the axis of rotation of the scraper member 22 (Figures 3 and 4). A tension spring 30 is arranged between the lower side of each support 17 and a lug 29 connected to the rear side of the supports 10 in the region of the bearing of the roller 13. The tension spring 30 draws the carrier structure formed by the supports 17, the plates 18 and the beam 20 together with the scraper member 22 supported thereby by means of a stop 31 provided at the front side of each plate 18 against an adjusting bolt 32. The adjusting bolt 32 is supported in a portion of the lug 29, which portion is folded outwardly at a right angle (Figure 3). By means of said adjusting bolt 32 the distance between the blade-shaped portions 26 of the scraper member 22 and the outer circumference of the tubular portion 14 of the roller 13 can be accurately set. Inside the box-like frame portion 1, each of the shafts 2 of the soil working members 3 is provided with a pinion 33, the arrangement being such that the pinions on the shafts of adjacent soil working members are in driving connection with each other. Near the centre, the shaft 2 of a soil working member 3 is extended. The extension reaches into a gear box 34 arranged at the upper side of the box-like frame portion 1. Inside the gear box 34, the extension is in driving connection via a bevel gear wheel transmission and a speed variator 35 arranged at the rear side with a shaft 36, which shaft extends in the direction of operative travel A and projects at the front side to beyond the gear box 34 and at the rear side to beyond the speed variator 35, respectively. At the rear side, the shaft 36 reaches into a gear box 37, inside which said shaft is in driving connection via a bevel gear wheel transmission with a shaft 38 which extends transversely to the direction of operative travel A and is bearing-supported in the gear box. At that side which, seen in the direction of operative travel A, is the left-hand side, the shaft 38 extends to beyond the gear box 37. The end of the shaft 38 projecting from the gear box 37 is connected to one end of a telescopic shaft 39, which end includes a universal joint. The other end of the shaft 39 also includes a universal joint and is arranged at the end of a shaft 40. The shaft 40 is bearing-supported in a box 41 provided on the outer side of the plate 18 (Figure 5). Inside the box 41, the shaft 40 accommodates a pulley 42, around which is passed a belt 43 which is also passed around a pulley 44. The pulley 44 is provided on a shaft 21 at that end which, seen in the direction of operative travel A, is the left-hand end of the scraper member 22. At its front side, the frame portion includes a trestle 45 which has a three-point connection for coupling the machine to the three-point lifting hitch of a tractor.

The machine described in the foregoing operates as follows:

During operation, the machine is coupled to the three-point lifting hitch of the tractor by means of the trestle 45 and the shaft 36 projecting at the front side from the gear box 34 is connected to the power take-off shaft of a tractor via an intermediate shaft 46. When the tractor travels in a direction indicated by the arrow A, the soil working members 3 are driven from the power take-off shaft via the intermediate shaft and the above-described transmission, whereby two adjacent soil working members rotate in opposite direction and cultivate by means of their soil working elements 5 at least adjoining strips of soil. The working depth of the soil working members 3 is set by means of the roller 13, it being possible to readjust the roller via the arms 8 with the aid of the threaded spindle 39. During operation, the scraper member 22 of the scraping device 23 is rotated in a direction as indicated by an arrow in Figures 3 and 4 via the shaft 36, the bevel gear wheel transmission in the gear box 37, the telescopic shaft 39 and the belt transmission in the box 41. In this arrangement, the scraper member 22 rotates such that the scrapers formed by the blade-shaped portions 26 move at the side facing the roller upwardly from the bottom along the outer side of the tubular portion 14, i.e. in the same direction as the outer side of the tubular portion 14 moves. During this movement, any earth adhering between the rings 15 at the outer side of the tubular portion 14 and at the inner side of the rings 15 is scraped-off, which earth is discharged to the rear with the aid of the blade-shaped portions 26 along the inner side of the cover 28 over the scraper member 22. Due to the forced drive of the scraper member 22 preferably having a rotational speed of 350 revs/min and the design and arrangement of the cover 28 it is then possible to achieve a crumbling of the scraped-off earth via the cover, so that the earth which is ultimately deposited on the newly-formed seed bed is dispersed into fine particles and does not adversely affect the germination of the seed. In the event of an excessive quantity of adhering earth, a first scraping action can be provided by the strip 19. Because of the specific arrangement of the scraper member 22 and its direction of rotation it is achieved that via the earth to be scraped-off a driving force is exerted on the roller 13, so that here a flexible drive for the roller is provided from the tractor via the scraper member. "Flexible" must here be understood to mean the fact that the drive of the roller is dependent on the quantity of earth to be scraped-off. If no earth sticks to the roller, a drive of the roller is obtained only by its contact with the soil, but no drive via the scraper member. The driving force exerted on the roller via the scraper member increases proportionally to the increase of the quantity of earth to be scraped-off. As normally always some earth will stick to the roller, a drive of the roller is obtained almost always, which drive may have a rotational speed of approximately 60 revs/min. The positive drive of the roller 13 stresses the action of the roller. The circumferential velocity of the scraper member 22 may be approximately twice that of the roller 13. The position of the scraper member 22 can be adjusted such with the aid of the adjusting screw 32 and the stops 31 provided at the front side of the plates 18 that, during operation, the blade-shaped portions 26 move at a greater or lesser distance along the outer circumference of the tubular portion 14 of the roller 13. This renders it also possible to vary the driving force for the roller 13. If hard objects, like stones, are caught between the scraper member 22 and the roller 13, the whole of the scraper member 22 and its carrier construction can deflect rearwardly against the action of the tension spring 30 about the shafts 16 constituting a pivotal axis. Hereby the shafts 16 are disposed at least substantially above the axis of rotation of the roller 13, and by means of the spring 30 it is accomplished that the scraper member 22 returns rapidly to its initial position.

Using the construction described in the foregoing, it is possible to remove effectively any earth sticking to a roller, which is in the form of a packer roller and also serves as a support of the machine and for setting the working depth of the soil working members, while at the same time a drive of the roller can be obtained via the scraper device. In this connection, the driving force, which is exerted from the tractor via the scraper member 22 on the roller 13 is dependent on the quantity of earth to be scraped off. The roller 13 can be combined with any type of soil cultivating machine or be used as an autonomous unit for cultivating the soil.

## Claims

1. A soil cultivating machine comprising a frame and a roller (13) for cultivating the soil, which roller (13) is provided with a scraping device (23) which is power driven and movable about an axis, characterized in that the scraping device (23) includes a scraping member (22) having a hollow carrier formed by a plurality of plates (24) extending in the direction of the axis of movement.

2. A soil cultivating machine as claimed in claim 1, characterized in that the plates (24) are detachably interconnected, said plates (24) forming at one side a blade shaped portion (26).

3. A soil cultivating machine as claimed in claim 1 or 2, characterized in that a scraper member (22) of a scraper device (23) is rotatably supported in a carrier construction which is provided pivotally with respect to the roller (13), and that a spring (30) is provided which maintains the scraper member (22) in the desired position.

4. A soil cultivating machine as claimed in claim 3, characterized in that the carrier structure bears against an adjustable stop (32), by means of which the spacing between the blade-shaped portions (26) of the scraper member (22) and the outer circumference of the roller (13) can be set.

5. A soil cultivating machine as claimed in claim 4, characterized in that the roller (13) includes a tubular portion (14), on which rings (15) are disposed equidistantly from each other, and that the blade shaped portions (26) of the scraper member (22) have recesses (27), which blade shaped portions (26) extend between the rings (15) to near the outer circumference of the tubular portion (14) of the roller (13).

6. A soil cultivating machine as claimed in any one of claims 1 to 5, characterized in that a flexible drive of the roller (13) is obtained by the scraping device (23) via the adhering earth to be removed by the scraper member (22), whilst the quantity of earth to be scraped-off determines the driving force for the roller (13).

7. A soil cultivating machine as claimed in any one of the preceding claims, characterized in that the scraper member (22) is driven at a rotational speed of approximately 350 revs/min.

8. A soil cultivating machine as claimed in any one of the preceding claims, characterized in that the drive for the scraping device (23) includes a telescopic shaft (39).

9. A soil cultivating machine as claimed in any one of the preceding claims, characterized in that it comprises a plurality of power-driven soil working members (3) which are arranged in a row extending transversely to the direction of operative travel, behind which the roller (13) is arranged for setting the working depth of the soil working members (3) and the scraping device (23) is drivable via the same drive as that by means of which the drive of the soil working members (3) is obtained.

## Patentansprüche

1. Bodenbearbeitungsmaschine mit einem Rahmen und einer Walze (13) zur Bodenbearbeitung, die mit einer Abstreifvorrichtung (23) versehen ist, welche zwangläufig angetrieben und um eine Achse bewegbar ist,
dadurch gekennzeichnet, daß die Abstreifvorrichtung (23) einen Abstreifer (22) aufweist, der einen hohlen Träger hat, welcher aus mehreren platten (24) besteht, die sich in Richtung der Bewegungsachse erstrecken.

2. Bodenbearbeitungsmaschine nach Anspruch 1,
dadurch gekennzeichnet, daß die Platten (24) lösbar verbunden sind und an einer Seite einen klingenförmigen Abschnitt (26) bilden.

3. Bodenbearbeitungsmaschine nach Anspruch 1 oder 2,
dadurch gekennzeichnet, daß ein Abstreifer (22) einer Abstreifvorrichtung (23) drehbar in einer Tragkonstruktion abgestützt ist, welche in bezug auf die Walze (13) schwenkbar ist, und daß eine Feder (30) vorgesehen ist, welche den Abstreifer (22) in der vorgegebenen Lage hält.

4. Bodenbearbeitungsmaschine nach Anspruch 3,
dadurch gekennzeichnet, daß die Tragkonstruktion an einem einstellbaren Anschlag (32) anliegt, durch den der Abstand zwischen den klingenförmigen Abschnitten (26) des Abstreifers (22) und dem Außenumfang der Walze (13) einstellbar ist.

5. Bodenbearbeitungsmaschine nach Anspruch 4,
dadurch gekennzeichnet, daß die Walze (13) ein rohrförmiges Teil (14) aufweist, auf dem Ringe (15) in gleichen Abständen voneinander angeordnet sind, und daß die klingenförmigen Abschnitte (26) des Abstreifers (22) Ausnehmungen (27) aufweisen und sich zwischen den Ringen (15) bis nahe an den Außenumfang des rohrförmigen Teiles (14) der Walze (13) erstrecken.

6. Bodenbearbeitungsmaschine nach einem der Ansprüche 1 bis 5,
dadurch gekennzeichnet, daß mittels der Abstreifvorrichtung (23) über die anhaftende und von dem Abstreifer abzustreifende Erde ein flexibler Antrieb der Walze (13) erhalten wird, wobei die Antriebskraft von der Menge der abzustreifenden Erde bestimmt ist.

7. Bodenbearbeitungsmaschine nach einem der vorhergehenden Ansprüche,
dadurch gekennzeichnet, daß der Abstreifer (22) mit einer Drehgeschwindigkeit von etwa 350 U/min angetrieben ist.

8. Bodenbearbeitungsmaschine nach einem der vorhergehenden Ansprüche,
dadurch gekennzeichnet, daß der Antrieb für die Abstreifvorrichtung (23) eine Teleskopwelle (39) enthält.

9. Bodenbearbeitungsmaschine nach einem der vorhergehenden Ansprüche,
dadurch gekennzeichnet, daß mehrere angetriebene Bodenbearbeitungsglieder (3) vorhanden sind, die in einer Reihe quer zur Arbeitsrichtung angeordnet sind, und daß hinter der Reihe die Walze (13) zur Einstellung der Arbeitstiefe der Bodenbearbeitungsglieder (3) angeordnet ist und die Abstreifvorrichtung (23) über denselben Antrieb antreibbar ist, mit dem der Antrieb der Bodenbearbeitungsglieder (3) bewirkt wird.

**Revendications**

1. Machine pour cultiver le sol comprenant un chassis et un rouleau (13) pour cultiver le sol, ce rouleau (13) étant muni d'un dispositif de grattoir (23) qui est motorisé et mobile autour d'un axe, caractérisée en ce que le dispositif de grattoir (23) comprend un organe râcleur (22) ayant un élément porteur creux formé d'une pluralité de plaques (24) s'étendant dans le sens de l'axe de mouvement.

2. Machine pour cultiver le sol selon la revendication 1, caractérisée en ce que les plaques (24) sont reliées entre elles de manière amovible, ces plaques (24) formant sur un de leurs côtés une partie (26) enforme de lame.

3. Machine pour cultiver le sol selon la revendication 1 ou 2, caractérisée en ce qu'un organe râcleur (22) d'un dispositif de grattoir (23) est soutenu de manière rotative dans une structure porteuse qui est pivotante par rapport au rouleau (13), et en ce qu'un ressort (30) est prévu pour maintenir l'organe râcleur (22) dans la position désirée.

4. Machine pour cultiver le sol selon la revendication 3, caractérisée en ce que la structure porteuse porte contre une butée réglable (32) au moyen de laquelle peut être réglé l'espacement entre les parties (26) en forme de lames de l'organe râcleur (22) et la circonférence externe du rouleau (13).

5. Machine pour cultiver le sol selon la revendication 4, caractérisée en ce que le rouleau (13) comprend une partie tubulaire (14) sur laquelle sont disposées des couronnes (15) équidistantes entre elles, et en ce que les parties (26) en forme de lames de l'organe râcleur (22) présentent des renfoncements (27), ces parties (26) en forme de lames s'étendant entre les couronnes (15) jusqu'au voisinage de la circonférence extérieure de la partie tubulaire (14) du rouleau (13).

6. Machine pour cultiver le sol selon l'une quelconque des revendications 1 à 5, caractérisée en ce qu'un entraînement flexible du rouleau (13) est obtenu par le dispositif de grattoir (23) par l'intermédiaire de la terre adhérante destinée à être enlevée par l'organe râcleur (22), tandis que la quantité de terre à être enlevée par grattage détermine la force d'entraînement du rouleau (13).

7. Machine pour cultiver le sol selon l'une quelconque des revendications précédentes, caractérisée en ce que l'organe râcleur (22) est entraîné à une vitesse de rotation d'environ 350 tours/minute.

8. Machine pour cultiver le sol selon l'une quelconque des revendications précédentes, caractérisée en ce que la transmission pour entraîner le dispositif de grattoir (23) comporte un arbre télescopique (39).

9. Machine pour cultiver le sol selon l'une quelconque des revendications précédentes, caractérisée en ce qu'elle comprend une pluralité d'organes de travail du sol (3) motorisés, qui sont disposés en une rangée s'étendant transversalement au sens de marche pour le travail, derrière laquelle est disposé le rouleau (13) pour regler la profondeur de travail des organes de travail du sol (3), et en ce que le dispositif de grattoir (23) peut être entraîné par l'intermédiaire de la transmission assurant l'entraînement des organes de travail du sol (3).

FIG.1

FIG.2

FIG.3

FIG. 5

FIG. 4